# EUROPEAN PATENT APPLICATION

(11) **EP 3 996 014 A1**
(43) Date of publication of application: **11.05.2022**
(21) Application number: 20834866.4
(22) Date of filing: 26.06.2020
(51) Int. Cl.: G06Q 10/08, G06Q 30/02

(54) **MANAGEMENT DEVICE, MANAGEMENT SYSTEM, MANAGEMENT METHOD, MANAGEMENT PROGRAM, AND RECORDING MEDIUM**

(30) Priority: 02.07.2019 JP 2019123793
(71) Applicant: Nagase & Co., Ltd., Osaka 550-8668 (JP)
(72) Inventor: KANEDA, Kitahiro, Tokyo 103-8355 (JP)
(74) Representative: Vidon Brevets & Stratégie
(86) International application number: PCT/JP2020/025125
(87) International publication number: WO 2021/002284

(57) **Abstract**

An aspect of the present invention achieves more reliable traceability of an object for transactions in a supply chain of a material. A management device (10), which is located at a base that is a component of a supply chain in which transactions of a material of a product are made, includes: a material identification information generating section (11) configured to generate material identification information indicating a feature unique to the material, by using information indicating the material obtained by a sensor; and a transaction registering section (13) configured to register, in a blockchain stored in a blockchain system (200), a piece of transaction data containing the material identification information generated, the piece of transaction data being registered as transaction data indicating transaction content for the material.

## Description

### Technical Field

The present invention relates to a technique for recording transaction details in a supply chain of a material.

### Background Art

It is known that blockchains are used to record transaction details in supply chains of various industries. A blockchain is a sequence of blocks in which information is stored. A duplicate of the blockchain is stored in each of a plurality of nodes. When a new block is approved by the plurality of nodes according to a predetermined consensus algorithm, the new block is added to the blockchain. Blockchains are characterized in that information cannot be easily tampered or erased. Therefore, the reliability of the transaction details is ensured by using blockchains for recording transaction details. Further, since all transaction details are recorded without being tampered or erased after operations, a traceability function is realized.

In such a supply chain, in order to achieve more reliable traceability, it is required to ensure the identicalness of objects for transactions. For example, in supply chains of materials, a material that is an object for transactions may be, for example, replaced by mistake, intentionally replaced, or altered. In order to deal with such a matter, it can be considered to do the following in supply chains of materials: have the quality of a material inspected by an analyzer; and include a result of such inspection in transaction details and store the transaction details including the result. However, there is a problem in that the result of the inspection may involve an inspection error. Further, it is impractical to perform an inspection on each transaction.

Patent Literature 1 discloses a technique relevant to such problems. Patent Literature 1 discloses a device which (a) registers, in an image database, an authentication image in which an image of an article for registration is captured as a subject, and (b) records, in a blockchain, a transaction information block which contains a digest of the authentication image. The device also determines the identicalness by using an image of an article whose identicalness a user wants to check and the authentication image registered in the image database. At this time, the device determines, with use of the digest registered in the transaction information block, that the authentication image registered in the image database has not been tampered.

### Citation List

### [Patent Literature]

[Patent Literature 1]
Japanese Patent Application Publication Tokukai No. 2018-173692 (Publication date: November 8, 2018)

### Summary of Invention

### Technical Problem

However, the device described in Patent Literature 1 has the following problems.

The device disclosed in Patent Literature 1 obtains the authentication image from the image database and the digest from the blockchain when a user inputs identification information with which an article to be checked can be identified. If the identification information is improper due to tampering, replacement by mistake, or the like, it is difficult for the device disclosed in Patent Literature 1 to correctly determine the identicalness of the article. Accordingly, there is room for improvement in reliability of traceability.

Further, in the device disclosed in Patent Literature 1, an antique or the like is assumed as the article, and an image used as the authentication image obtained by capturing an image of the article includes features such as shadows caused by fine irregularities on an article surface. In a case where a material is applied as the article, a powdery or liquid material is also assumed. Accordingly, the material does not necessarily have a feature on an article surface. Therefore, in supply chains of materials, it is difficult to determine the identicalness of a material by use of an authentication image as disclosed in Patent Literature 1. Accordingly, there is room for improvement in reliability of traceability.

An object of an aspect of the present invention is to provide a technique that achieves more reliable traceability of an object for transactions in supply chains of materials.

### Solution to Problem

In order to solve the above problems, a management device in accordance with an aspect of the present invention is a management device located at a base that is a component of a supply chain in which transactions of a material of a product are made, the management device including: a material identification information generating section configured to generate material identification information indicating a feature unique to the material, by using information indicating the material obtained by a sensor; and a transaction registering section configured to register, in a blockchain, a piece of transaction data containing the material identification information, the piece of transaction data being registered as transaction data indicating transaction content for the material, the blockchain being shared by a plurality of nodes and having a sequence of blocks containing the transaction data indicating the transaction content for the material, the plurality of nodes being configured to approve a block by using a predetermined consensus algorithm and the block being added to the blockchain.

In order to solve the above problems, a management system in accordance with an aspect of the present invention includes: a management device described above, the management device being located at each of a plurality of bases constituting a supply chain in which transactions of a material of a product are made; and a blockchain system constituted by the plurality of nodes.

In order to solve above problems, a method in accordance with an aspect of the present invention includes steps carried out by a management device located at a base that is a component of a supply chain in which transactions of a material of a product are made, the steps being the steps of: generating material identification information indicating a feature unique to the material, by using information indicating the material obtained by a sensor; and registering, in a blockchain, a piece of transaction data containing the material identification information, the piece of transaction data being registered as transaction data indicating transaction content for the material, the blockchain being shared by a plurality of nodes and having a sequence of blocks containing the transaction data indicating the transaction content for the material, the plurality of nodes being configured to approve a block by using a predetermined consensus algorithm and the block being added to the blockchain.

In order to solve the above problems, a management program in accordance with an aspect of the present invention is for causing a computer to function as a management device described above, the management program causing the computer to function as each of said sections.

In order to solve the above problems, a computer-readable storage medium in accordance with an aspect of the present invention is a storage medium in which a management program described above is stored.

### Advantageous Effects of Invention

An aspect of the present invention can provide a technique that achieves more reliable traceability of an object for transactions in supply chains of materials.

### Brief Description of Drawings

Fig. 1 is a block diagram illustrating a configuration of a management system in accordance with an embodiment of the present invention.
Fig. 2 is a block diagram illustrating a functional configuration of a node in accordance with an embodiment of the present invention.
Fig. 3 is a diagram schematically illustrating data structures of a blockchain and transaction data.
Fig. 4 is a block diagram illustrating a functional configuration of a management device in accordance with an embodiment of the present invention.
Fig. 5 is a diagram showing an example screen of information which indicates a transaction history (history information) in accordance with an embodiment of the present invention.
Fig. 6 is a diagram showing another example screen of information which indicates a transaction history (history information) in accordance with an embodiment of the present invention.
Fig. 7 is a flow chart showing an operation in which a management device in accordance with an embodiment of the present invention generates material identification information and registers transaction data.
Fig. 8 is a flow chart showing an operation in which a management device in accordance with an embodiment of the present invention evaluates the identicalness of a material.
Fig. 9 is a flow chart showing an operation in which a management device in accordance with an embodiment of the present invention outputs a transaction history of a material.
Fig. 10 is a sequence diagram which illustrates a specific example of operations of management devices, the operations being carried out at respective bases in an embodiment of the present invention.
Fig. 11 is a diagram schematically illustrating a plurality of blockchains stored in Variation 5 in accordance with an embodiment of the present invention.
Fig. 12 is a diagram showing an example of a data structure of a table which is referred to in Variation 5 in accordance with an embodiment of the present invention.
Fig. 13 is a diagram schematically illustrating a blockchain that is duplicated in Variation 5 in accordance with an embodiment of the present invention.
Fig. 14 is a flowchart illustrating an operation in which a registration device registers transaction data in Variation 5 in accordance with an embodiment of the present invention.
Fig. 15 is a block diagram illustrating physical configurations of a management device and a node in accordance with an embodiment of the present invention.

### Description of Embodiments

### [Embodiment]

The following will discuss an embodiment of the present invention in detail. A management system 1 in accordance with the present embodiment is a system for recording, in a blockchain, transaction details of a material of a product. Here, in the present embodiment, the material is powdery or liquid, and when transactions for the material are made, the material is, for example, in a condition of being contained in a package such as a can, a bag, or a box in a transaction. Note that examples of a package material include paper, metal, and plastic. Further, the material of the product has a lot number assigned thereto. The lot number is written or printed on a surface of the package, or a label on which the lot number is written or printed is attached to the surface of the package.

### <Configuration of management system 1>

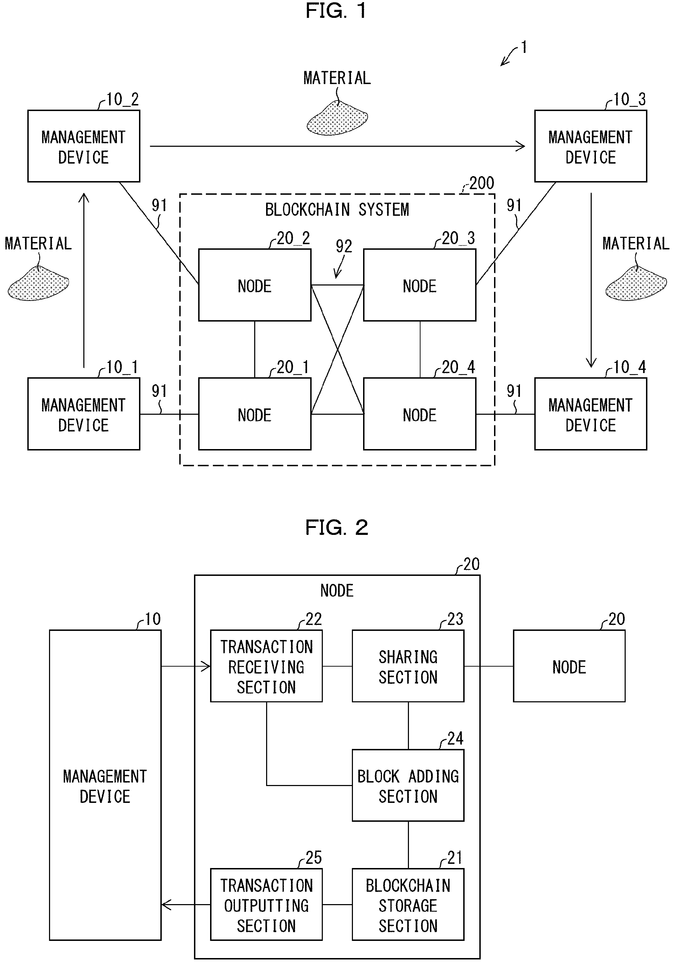

Fig. 1 is a block diagram illustrating a configuration of a management system 1 in accordance with an embodiment of the present invention. In Fig. 1, the management system 1 includes management devices 10_1 to 10_4 and a blockchain system 200.

Each of the management devices 10_1 to 10_4 is located at one of a plurality of bases that constitute a supply chain of a material of a product. For example, the management device 10_1 is located at a base of a subcontractor that manufactures the material. The management device 10_2 is located at a base of a material manufacturer that packs, in a package for distribution, the material which has been purchased from the subcontractor, and sells the material thus packaged. The management device 10_3 is located at a base of an importer/ exporter. The management device 10_4 is located at a base of a distributor who imports the material and sells the material to end users. Hereinafter, subjects involved in transactions of a material will be also referred to as transaction subjects. Examples of such subjects include a subcontractor, a material manufacturer, an importer/exporter, a distributor, and an intermediary (e.g., a commercial company, an agent, and a wholesaler).

The management devices 10_1 to 10_4 each have the same functional configuration. Hereafter, the management devices 10_1 to 10_4 are each also referred to simply as "management device 10" when the management devices 10_1 to 10_4 do not need to be distinguished from each other. Fig. 1 illustrates four management devices 10 located at respective four bases. However, Fig. 1 does not limit the number of management devices 10 and the number of bases where the management devices 10 are located in the management system 1 in the present embodiment. Other examples of the bases at which transactions are made and at which the management devices 10 are provided include respective bases of logistics service providers (e.g., warehousers, transport service providers, and third-party logistics (3PL)), importers/exporters (e.g., forwarding agents, and shipping companies), customs brokers, customs, analyzers, intermediaries (e.g., commercial companies, agents, and wholesalers), and end users.

The management device 10 is connected, via a network 91, with at least one of nodes 20_1 to 20_4 so as to be capable of communicating with the nodes 20_1 to 20_4, the nodes 20_1 to 20_4 being included in the blockchain system 200 (described later). The network 91 may be a wired local area network (LAN), a wireless LAN, the Internet, or a combination thereof. It should be noted here that the nodes 20_1 to 20_4 each have the same functional configuration. Hereinafter, the nodes 20_1 to 20_4 are each also referred to simply as "node 20" when the nodes 20_1 to 20_4 do not need to be distinguished from each other.

Note that although in Fig. 1, the management devices 10 and the nodes 20 are connected in one-to-one correspondence, each of the management devices 10 need only be connected to at least one of the nodes 20 so as to be capable of communicating with that node 20. The management devices 10 need not necessarily be connected to the nodes 20 in the one-to-one correspondence. Further, the number of the management devices 10 and the number of nodes 20 may not be equal to each other. Furthermore, the node 20 may be located at a base where management device 10 is located. The management device 10 and the node 20 may be configured as an integral device, instead of being connected to each other via the network 91 so as to be capable of communicating with each other.

### <Functional configuration of blockchain system 200>

The blockchain system 200 is a system for recording data by using a blockchain. As illustrated in Fig. 1, the blockchain system 200 includes the plurality of nodes 20. These nodes 20 are connected to each other via a peer to peer (P2P) network 92. The blockchain is a sequence of blocks in which information is recorded and which are shared by the plurality of nodes 20. Specifically, respective identical blockchains obtained by duplication of one blockchain are stored in the plurality of nodes 20, so that sharing of the blockchain by the plurality of nodes 20 is realized. Further, the plurality of nodes 20 approve a block according to a predetermined consensus algorithm, and this block is added to the blockchain.

Fig. 2 is a block diagram illustrating a functional configuration of the node 20. In Fig. 2, the node 20 includes a blockchain storage section 21, a transaction receiving section 22, a sharing section 23, a block adding section 24, and a transaction outputting section 25.

The blockchain is stored in the blockchain storage section 21. The blockchain is synchronized so as to have the same content as respective blockchains stored in other blockchain storage sections 21 of other nodes 20.

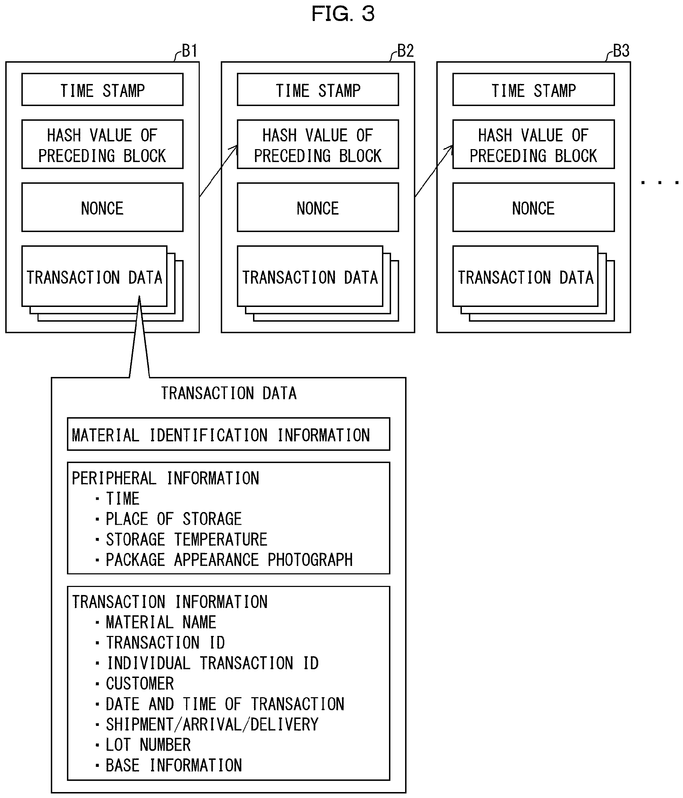

Fig. 3 is a diagram schematically illustrating configurations of a blockchain and of each of the blocks. In Fig. 3, each of blocks B1, B2, and B3 contains a time stamp, a hash value of an immediately preceding block, a nonce, and one or more pieces of transaction data. Since each of the blocks contains the hash value of the immediately preceding block, the order relationship between the blocks is defined and the blockchain is constructed. In Fig. 3, the blockchain including the blocks B1, B2, B3, ... arranged in this order is formed. Note that the transaction data illustrated in Fig. 3 will be described later.

The transaction receiving section 22 obtains transaction data that is to be recorded in a blockchain. When the transaction receiving section 22 obtains the transaction data, the transaction receiving section 22 broadcasts the transaction data thus obtained to the other nodes 20 via the sharing section 23 (described later). Examples of the transaction data include, but are not limited to, information representing transaction details. In the present embodiment, the transaction data is received from the management device 10. Note however that the transaction data may be received from another device via a network, or may be inputted via an input device. Further, the transaction data may also be obtained by reading data that is stored in a portable storage medium.

The sharing section 23 transmits and receives data which is to be shared by the other nodes 20. For example, the sharing section 23 broadcasts the data obtained or generated by the node 20 to those other nodes 20. The sharing section 23 also receives data broadcasted from another node 20.

The block adding section 24 generates a block to be added to the blockchain. The block adding section 24 includes, in the block to be added, a hash value of the last block in the blockchain which is stored in the blockchain storage section 21. The block adding section 24 also includes, in the block to be added, one or more pieces of transaction data which has not yet been registered in the blockchain from among the transaction data obtained by the transaction receiving section 22 and transaction data received by the sharing section 23. Further, the block adding section 24 carries out a process for calculating, as a nonce to be included in the block to be added, a nonce which satisfies a predetermined condition. The process for calculating the nonce will be described later. In a case where the block to be added which is generated as described above is approved by the plurality of nodes 20 according to the predetermined consensus algorithm, the block adding section 24 adds the block thus generated to the blockchain stored in the blockchain storage section 21. Further, the block adding section 24 broadcasts, to the other nodes 20 via the sharing section 23, the block to be added.

In addition, the block adding section 24 adds, to the blockchain which is stored in the blockchain storage section 21, the block which has been received from the another node 20 via the sharing section 23. At this time, the block adding section 24 may first verify whether the block received from the another node 20 is a valid block which has been approved according to the predetermined consensus algorithm. Then, in a case where the block is verified to be valid, the block adding section 24 may carry out a process for adding the block.

The consensus algorithm is an algorithm for allowing the plurality of nodes 20 to agree on a single result. A typical known example of the consensus algorithm includes Proof of Work (PoW). In the PoW, a block generated by a node 20 which has first calculated a nonce that satisfies a predetermined condition among a plurality of nodes 20 is approved as a block to be added to a blockchain. Note that examples of the predetermined condition include, but are not limited to, a condition that a hash value of a block including the nonce has a predetermined number of zeros in succession at the beginning of the hash value. In the PoW, when the blockchain is forked in (a) a case where a plurality of nodes 20 have simultaneously calculated a nonce that satisfies the predetermined condition, (b) a case where there is an effect of a communication delay and/or the like, and/or (c) the like case, a longer blockchain is approved as valid. However, the consensus algorithm is not limited to the PoW, and another algorithm may be used.

On receipt of a search condition for retrieving transaction data, the transaction outputting section 25 retrieves, from the blockchain stored in the blockchain storage section 21, transaction data that satisfies the search condition, and then outputs the transaction data.

The blockchain system 200 configured as described above is characterized in that information recorded in the blockchain cannot be easily tampered or erased. Thus, the use of a blockchain for recording processes relating to transactions ensures the reliability of a resultant record. In addition, since the processes relating to all of the transactions are recorded without being tampered or erased after operations, traceability is achieved. The traceability of an article is accomplished by tracing, for an input (an article received) recorded in a certain piece of transaction data, another piece of transaction data in which an output (an article sent out) that is identical to the input is recorded.

Hereinafter, the blockchain shared by the nodes 20 of the blockchain system 200 is also referred to simply as "blockchain".

### <Configuration of management device 10>

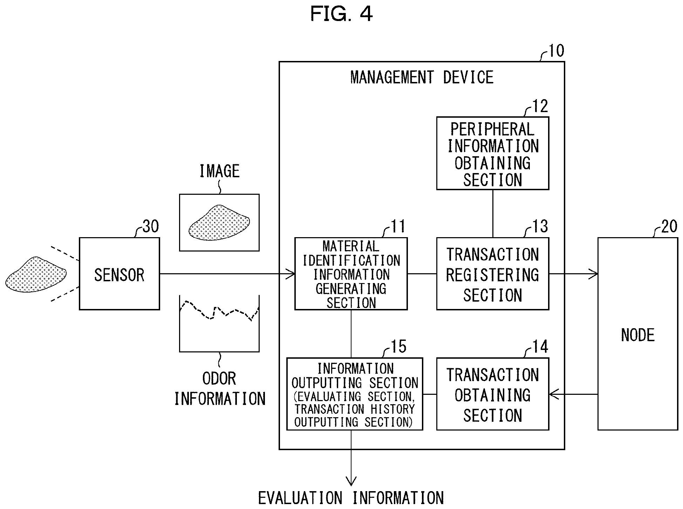

Fig. 4 is a block diagram illustrating a functional configuration of the management device 10. In Fig. 4, the management device 10 includes a material identification information generating section 11, a peripheral information obtaining section 12, a transaction registering section 13, a transaction obtaining section 14, and an information outputting section 15. The information outputting section 15 is an embodiment of an evaluating section and a transaction history outputting section in the present invention. The management device 10 is also connected to a sensor 30. The management device 10 is coupled to at least one of the plurality of nodes 20 so as to be capable of communicating with the at least one node 20. Note that it is preferable to encrypt data transmission and reception between blocks in the management device 10, data transmission and reception between the management device 10 and the sensor 30, and data transmission and reception between the management device 10 and the node 20. For example, the management device 10 may further include an encrypting section (not illustrated). In this case, the encrypting section encrypts and decrypts data for transmission and reception between blocks. Further, in a case where the node 20 has the function of carrying out encrypted communication, the encrypting section of the management device 10 encrypts and decrypts data for transmission and reception to/from the node 20. Furthermore, in a case where the sensor 30 has the function of carrying out encrypted communication, the encrypting section of the management device 10 decrypts data received from the sensor 30.

The material identification information generating section 11 generates material identification information indicating a feature unique to a material. In generating the material identification information, the material identification information generating section 11 uses information which indicates the material and which is obtained by using the sensor 30. It is possible to identify the material by the material identification information, and to determine the identicalness of the material by comparing pieces of the material identification information.

Examples of the sensor 30 include a camera. In this case, an image of the material is obtained as the information indicating the material. Note that the information indicating the material is not limited to this. Examples of the information indicating the material include an image showing a size, a shape, a texture, and a reflection spectral distribution of the material, and information indicating an odor of the material, the information indicating the odor being obtained by volatile component analysis, odor analysis, and/or the like. Examples of the sensor 30 for obtaining an image indicating a reflection spectral distribution include a spectrophotometer. Examples of the sensor 30 which obtains information indicating an odor include a chromatograph. Examples of other odor sensors include a semiconductor-type sensor, a crystal oscillator-type sensor, a field effect transistor (FET) biosensor, a membrane-type surface-stress sensor, and the like. Other examples of the sensor 30 include a fluoroscopic image obtaining sensor. Specific examples of the fluoroscopic image obtaining sensor include, but are not limited to, an X-ray sensor. In this case, a fluoroscopic image of the material is obtained as the information indicating the material. Still other examples of the sensor 30 include a liquid analyzer. Specific examples of the liquid analyzer include, but are not limited to, liquid chromatography mass spectrometry (LC-MS), inductively coupled plasma-mass spectrometry (ICP-MS), and liquid chromatography-nuclear magnetic resonance (LC-NMR). In this case, the concentration of a specific component in the material is obtained as the information indicating the material. Further, other examples of the sensor 30 include a potential of hydrogen (pH) sensor. In this case, the pH value of the material is obtained as the information indicating the material.

The material identification information generating section 11 can use a plurality of types of information obtained by a plurality of types of sensors 30 instead of one type of sensor 30. For example, the material identification information generating section 11 may generate the material identification information by using an image and odor information of the material. As a method of generating the material identification information, it is possible to use a known method in which a feature unique to a material is extracted by removing noise from information indicating the material (e.g., image and odor information of the material).

The material identification information generating section 11 may generate the material identification information by using information indicating the state, physical properties, and/or the like which the material exhibits as a substance, in addition to the information obtained from the sensor 30. Examples of the state which the material exhibits as a substance include a solid state, a liquid state, and a gas state. Additionally, it is possible to use a semi-solid state, a dispersion state, and/or the like. Examples of the state which the material exhibits as a substance, however, are not limited to those described above. Meanwhile, examples of the physical properties include, but are not limited to, mass, viscosity, elasticity, melting point, boiling point, and the like. In this case, the material identification information generating section 11 may obtain the information indicating the state, the physical properties, and/or the like which the material exhibits as a substance, via an input operation or from a database (not illustrated) in which the state, the physical properties, and/or the like which the material exhibits as a substance are stored.

It should be noted that, at a base where the process of packing the material in the package is carried out, the information indicating the material can be obtained, by using the sensor 30, from the material prior to the packing. At a base where a transaction of the material contained in the package is made, the information indicating the material can be obtained, by using the sensor 30, from the material sampled from the package. Furthermore, at a base where a transaction of the material contained in the package is made, the information indicating the material can be obtained by using the sensor 30 which is capable of sensing the material while the material is contained in the package. For example, in a case where at least part of the package is made of a packaging material that is transparent to infrared radiation, an infrared camera can be used as the sensor 30 for obtaining an image of the material.

The peripheral information obtaining section 12 obtains peripheral information indicating a surrounding condition of the material for the transaction. Examples of the peripheral information include, but are not limited to, information indicating a place of storage of the material, information about the place of storage (e.g., temperature, humidity, and gas concentration (e.g., concentration(s) of oxygen and/or carbon dioxide)) of the material, and information indicating a package appearance photograph (an image in which the package is photographed as a subject) of the material. The peripheral information may include the time at which the peripheral information was obtained.

The transaction registering section 13 registers transaction data indicating transaction content for the material, in the blockchain which is stored in the blockchain system 200. The transaction data includes the material identification information generated as described above and the peripheral information obtained as described above. The material identification information is information which does not change during distribution of the material, and the peripheral information is information which may change during the distribution of the material. Further, the transaction data may include transaction information indicating the transaction content in addition to the material identification information and the peripheral information.

The following will discuss a configuration of the transaction data, with reference to Fig. 3. As illustrated in Fig. 3, the transaction data includes at least the material identification information. The transaction data also includes the peripheral information. The transaction data includes the transaction information. Examples of the transaction information include, but are not limited to, a material name, a transaction ID, an individual transaction ID, a customer, types of shipment/arrival/delivery, a lot number, base information, the date and time of transaction, and the like. In this example, the "transaction ID" is an ID which is assigned so as to correspond to a transaction route of a material, and is an ID which is used consistently in a series of transactions in the route. The "individual transaction ID" is an ID which is assigned to each transaction executed between bases. The transaction information can also include information according to the electronic data interchange (EDI) standard format.

The transaction obtaining section 14 obtains the transaction data indicating the transaction content for the material obtained by a transaction, from the blockchain which is stored in the blockchain system 200. Specifically, the transaction obtaining section 14 transmits, to the node 20, a search condition that a transaction ID identifying a transaction in which the material is obtained is contained, and obtains transaction data indicating the transaction content.

The transaction obtaining section 14 also obtains one or more pieces of transaction data from the blockchain stored in the blockchain system 200, the transaction data including the material identification information having been generated from the material obtained by the transaction. Specifically, the transaction obtaining section 14 transmits, to the node 20, a search condition that the material identification information is contained, so that the one or more pieces of transaction data are obtained.

The information outputting section 15 compares the material identification information which is contained in the transaction data indicating the transaction content, with the material identification information which is generated from the material obtained by the transaction. In addition, on the basis of a result of this comparison, the information outputting section 15 outputs evaluation information which is obtained by evaluating the identicalness between the material indicated by the transaction data and the material obtained by the transaction. Specifically, the information outputting section 15 may calculate the degree of coincidence between those two pieces of the material identification information, and outputs, as the evaluation information, the degree of coincidence thus calculated. In addition, the information outputting section 15 may output the evaluation information indicating whether or not those materials are identical to each other, depending on whether or not the degree of coincidence is equal to or greater than a threshold.

Further, the information outputting section 15 outputs information indicating a transaction history of the material, on the basis of the date and time when one or more pieces of the transaction data including a predetermined material identification information are registered in the blockchain. For example, the information outputting section 15 outputs the information indicating the transaction history, by arranging the peripheral information and the transaction information included in pieces of the transaction data in the order of the date and time of registration. In other words, the information indicating the transaction history includes a history of the peripheral information and a history of the transaction information. By referring to the information indicating the transaction history thus outputted, a user can check, for example, a history of the base information (i.e., distribution route). The user can also check, for example, a history of the storage temperature of the material. As a result, the user who has received the material can check whether or not the material has arrived at the user at an appropriate time, via an appropriate route, and in an appropriate storage condition, by checking the history of the transaction information and the history of the peripheral information.

As described above, the information outputting section 15 evaluates the identicalness of a material, by using the material identification information which does not change during distribution of the material. The information outputting section 15 also provides a user with the history information of the material, by using the peripheral information that may change during the distribution of the material. For example, the information outputting section 15 provides the history information of the material to the user by outputting the history information to an output device 50 which will be described later.

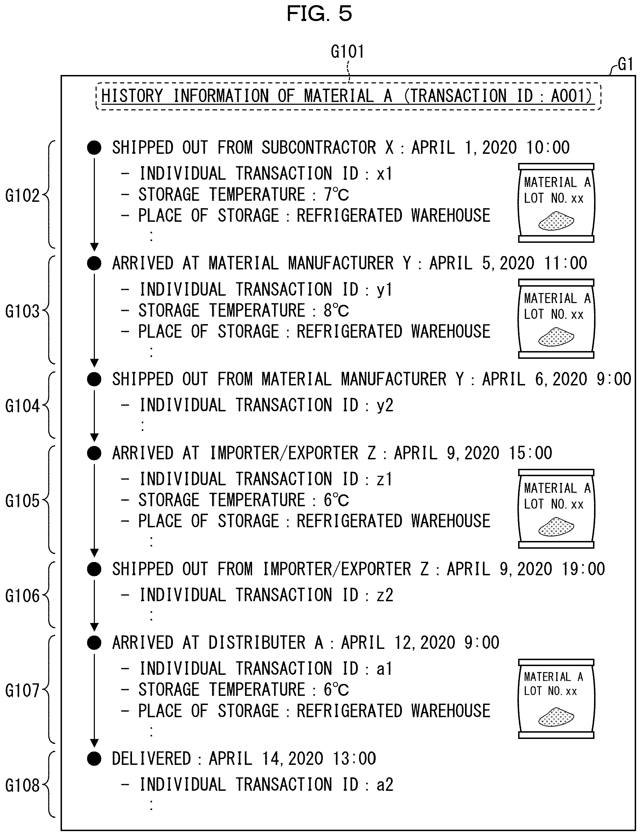

Fig. 5 is a diagram showing an example screen of information which indicates the transaction history (history information) outputted by the information outputting section 15. In a case where the output device 50 is a display device, the information outputting section 15 displays the screen G1 on the display device. The screen G1 shows the history information until delivery of the material to an end user. However, the history information is not necessarily limited to the transaction history until the delivery to the end user. The history information may indicate a transaction history up to an intermediate stage on the distribution route.

As illustrated in Fig. 5, the screen G1 includes a title G101 and history data G102 to G108. The title G101 includes the name of the material and the transaction ID. The name of the material indicates the name of a material which has the history information, and the name here is "material A". The transaction ID indicates a transaction ID which is consistently used in a series of transactions associated with the "material A", and the transaction ID here is "A001". Pieces of the history information G102 to G108 each correspond to the transaction data which includes the material identification information of the "material A". The pieces of the history information G102 to G108 are arranged in the order of registration. In this example, the pieces of the history information G102, G103, G105, and G107 each include the peripheral information (the storage temperature, and information about the place of storage (e.g., temperature, humidity, and gas concentration (e.g., concentration(s) of oxygen and/or carbon dioxide)), and a package appearance photograph) and the transaction information (the time of transaction, and the individual transaction ID). Meanwhile, the history information G104, G106, and G108 includes the transaction information (the time of transaction, and the individual transaction ID). The information outputting section 15 may include, in the history information, part or all of information which is included in each piece of the transaction data including the material identification information of the "material A". The information outputting section 15 may also include, in the history information, some or all of a plurality of pieces of the transaction data each including the material identification information concerned.

As described above, the screen G1 here shows the history information until the delivery of the "material A" to the end user. For example, the information outputting section 15 of the management device 10 located at each base can output the screen G1 after the delivery of the "material A" to the end user. For example, in a case where the management device 10 is located at the base of the end user, the information outputting section 15 of the management device 10 outputs, on the display device, the screen G1 of the "material A" which has been delivered. This allows the end user to know the history information of the "material A" which has been delivered, the history information having very low possibility of having been tampered. Further, the information outputting section 15 of the management device 10 located at a base (e.g., a base of a material manufacturer Y) on the distribution route can output the screen G1, after the "material A" has been delivered to the end user after shipment of the "material A" from that base. As a result, the base (e.g., the material manufacturer Y) at an intermediate stage on the distribution route can know the history information having no possibility or very low possibility of tampering, after ultimate delivery of the "material A" to the end user subsequent to the shipment of the "material A" from that base (of the material manufacturer Y).

As described above, the information outputting section 15 can output, as the history information, information which indicates the transaction history up to the intermediate stage on the distribution route, without limitation to the screen G1. For example, the information outputting section 15 of the management device 10 located at a base on the distribution route (e.g., a base of an importer/ exporter Z) may display, as the history information, information indicating the transaction history up to that base at a stage in which transactions of the "material A" up to that base have been made. For example, the information outputting section 15 of the management device 10 located at the base of the importer/exporter Z displays, on the display device, the history information including the information G101 to G105 shown in Fig. 5 at the time when the "material A" has arrived at the base. In this manner, a user at any base on the distribution route of the material can know, as the history information of the material up to that point of time, information having no possibility or very low possibility of tampering at any point of time during the distribution process.

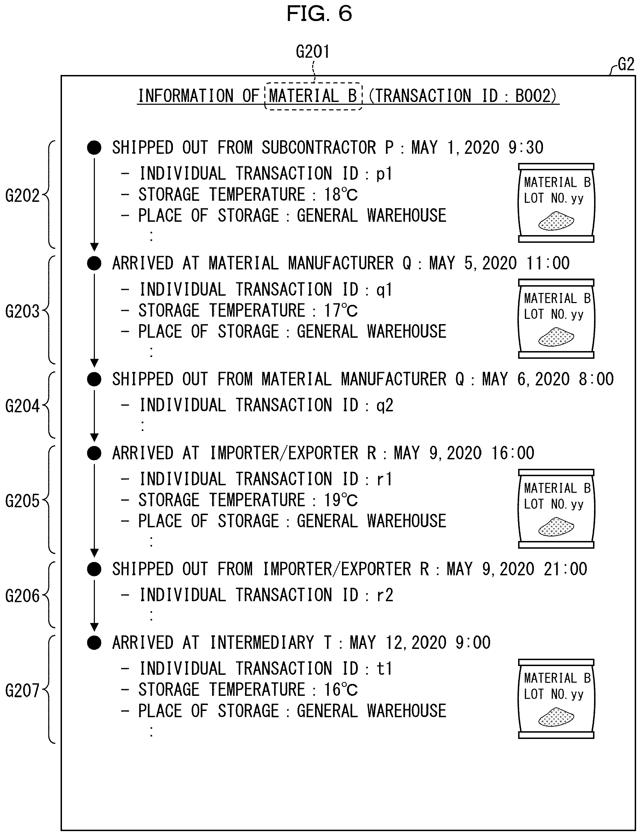

Fig. 6 is a diagram showing another example screen of information which indicates the transaction history (history information) outputted by the information outputting section 15. A screen G2 shown in Fig. 6 shows transaction history at an intermediate stage on the distribution route. In this example, the screen G2 is outputted by the management device 10 located at a base of an intermediary. It is assumed here that, in addition to the management devices 10_1 to 10_4 described above, another management device 10 is located at the base of the intermediary. For example, the intermediary may be a business partner who intermediates between an importer/ exporter and a distributor.

As illustrated in Fig. 6, the information outputting section 15 of the management device 10 located at the base of the intermediary outputs, as the history information, information indicating the transaction history up to that base at a stage in which transactions of a "material B" up to that base have been made.

The screen G2 includes a title G201 and history information G202 to G207. The title G201 includes the name of the material and the transaction ID. The name of the material indicates the name of the material which has the history information, and the name here is "material B". The transaction ID indicates a transaction ID which is consistently used in a series of transactions associated with the material B, and the transaction ID here is "B002". Pieces of the history information G202 to G207 each correspond to the transaction data which includes the material identification information of the "material B". The pieces of the history information G202 to G207 are arranged in the order of registration. Details of the history information G202 to G207 are the same as those of the history information G102 to G107 described with reference to Fig. 5, and therefore the detailed explanations thereof will not be repeated.

Further, for example, the information outputting section 15 may be triggered to output the history information, by generation of the material identification information by the material identification information generating section 11. In this case, a user at each base can cause the sensor 30 to detect a material contained in a package. Then, the user at each base can check, on the display device, the history information of the material up to that time.

In addition, the information outputting section 15 may display the history information in response to a user instruction received via an input device 40, which will be described later. For example, when the material identification information is generated by the material identification information generating section 11, the information outputting section 15 displays, on the display device, a user interface object (e.g., "history output button") that is to receive an instruction to output the history information. The user at each base can check, on the display device, the history information up to that time with regard to the material concerned, by making an operation on the user interface object with use of the input device 40 such as a mouse.

The information outputting section 15 may also display the history information in accordance with the transaction ID which is received via the input device 40. In this case, the information outputting section 15 identifies the material identification information of the material for which the transaction indicated by the transaction ID has been made. The information outputting section 15 also displays the history information by obtaining, from the blockchain system 200, a plurality of pieces of transaction data including the material identification information which has been identified. For example, suppose a case in which the material is contained in a package having a surface on which a one-dimensional code or a multi-dimensional code indicating a transaction ID is shown. The user at each base can check, on the display device, the history information of the material up to that time, by causing the input device 40 such as a handy scanner to read the one-dimensional code or the multi-dimensional code.

### <Operations of management system 1>

The following will discuss operations of the management system 1 configured as described above, with reference to the drawings.

### (Generation of material identification information and registration of transaction data)

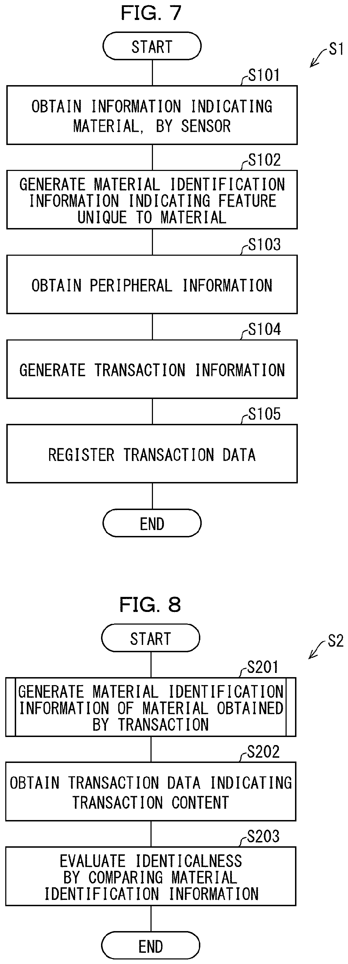

Fig. 7 is a flow chart showing an operation S1 in which the management device 10 generates material identification information and registers transaction data.

In step S101, the material identification information generating section 11 obtains, by using the sensor 30, information indicating a material. For example, the material identification information generating section 11 obtains, by using a camera and an odor sensor, an image and odor information of the material which has not yet been packed in a package or which has been sampled from a package. Alternatively, the material identification information generating section 11 obtains the image of the material, by scanning the package containing the material with use of the sensor 30 such as an infrared camera.

In S102, the material identification information generating section 11 generates material identification information indicating a feature unique to the material, with use of information which indicates the material and which has been obtained in step S101. The material identification information is generated by a known method of extracting the feature unique to the material with use of the information indicating the material.

In step S103, the peripheral information obtaining section 12 obtains peripheral information of the material. The peripheral information obtaining section 12 may obtain, as the peripheral information, information which is inputted via an input device (e.g., time, and place of storage). The peripheral information obtaining section 12 may also obtain, as the peripheral information, information (e.g., a storage temperature, and a package appearance photograph) which is transmitted from a detection device for detecting the peripheral information (e.g., a temperature sensor for detecting the temperature of the place of storage, and a camera for taking an image of a package appearance).

In step S104, the transaction registering section 13 generates transaction information relating to the material. For example, the transaction registering section 13 may obtain the transaction information via a user input. For example, the transaction registering section 13 may obtain, via a user input, information that differs for each transaction (e.g., a transaction ID, a customer, the date and time of transaction, and types of shipment/arrival/delivery) among the transaction information. The transaction registering section 13 may also obtain information which has been stored, as information determined depending on a base (e.g., base information) among the transaction information. The transaction registering section 13 may also obtain, from an external device, information that can be detected by the external device (e.g., lot number readable by a reader) among the transaction information.

In step S105, the transaction registering section 13 transmits, to the node 20, transaction data which includes (a) the material identification information which has been generated in step S102, (b) the peripheral information which has been obtained in step S103, and (c) the transaction information which has been generated in step S104, so that the transaction data is registered in a blockchain.

Then, the management device 10 ends the operation S1.

### (Evaluation of identicalness)

Fig. 8 is a flow chart showing an operation S2 in which the management device 10 evaluates the identicalness of a material.

In step S201, the material identification information generating section 11 generates material identification information of a material obtained by a transaction. Since the details of step S201 are the same as those of steps S101 and S102 described above, and therefore, detailed explanations thereof will not be repeated.

In step S202, the transaction obtaining section 14 obtains, from the blockchain, the transaction data indicating a transaction in which the material has been obtained. Specifically, the transaction obtaining section 14 transmits, to the node 20, a search condition that a transaction ID which identifies the transaction is contained, and obtains transaction data concerned.

In step S203, the information outputting section 15 evaluates the identicalness of the material by comparing the material identification information which has been obtained in step S201 and the material identification information contained in the transaction data which has been obtained in step S202, and outputs evaluation information obtained by that evaluation.

Then, the management device 10 ends the operation S2.

### (Output of transaction history)

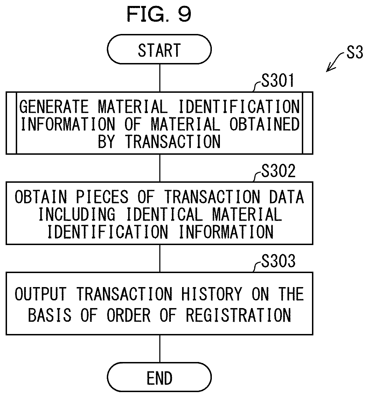

Fig. 9 is a flow chart showing an operation S3 in which the management device 10 outputs a transaction history of a material.

In step S301, the material identification information generating section 11 generates material identification information of a material obtained by a transaction. Since the details of step S301 are the same as those of steps S101 and S102 described above, and therefore, detailed explanations thereof will not be repeated.

In step S302, the transaction obtaining section 14 obtains, from a blockchain, one or more pieces of transaction data including the material identification information which has been obtained in step S301. Specifically, the transaction obtaining section 14 transmits, to the node 20, a search condition that the material identification information is contained, and obtains transaction data concerned.

In step S303, the information outputting section 15 outputs information which indicates a transaction history, on the basis of the order of registration of the pieces of the transaction data which have been obtained in step S302. The information which indicates the transaction history includes information which indicates a history of the peripheral information and information which indicates a history of the transaction information.

Then, the management device 10 ends the operation S3.

### (Specific examples of operations made by management devices 10 at respective bases in association with distribution of material)

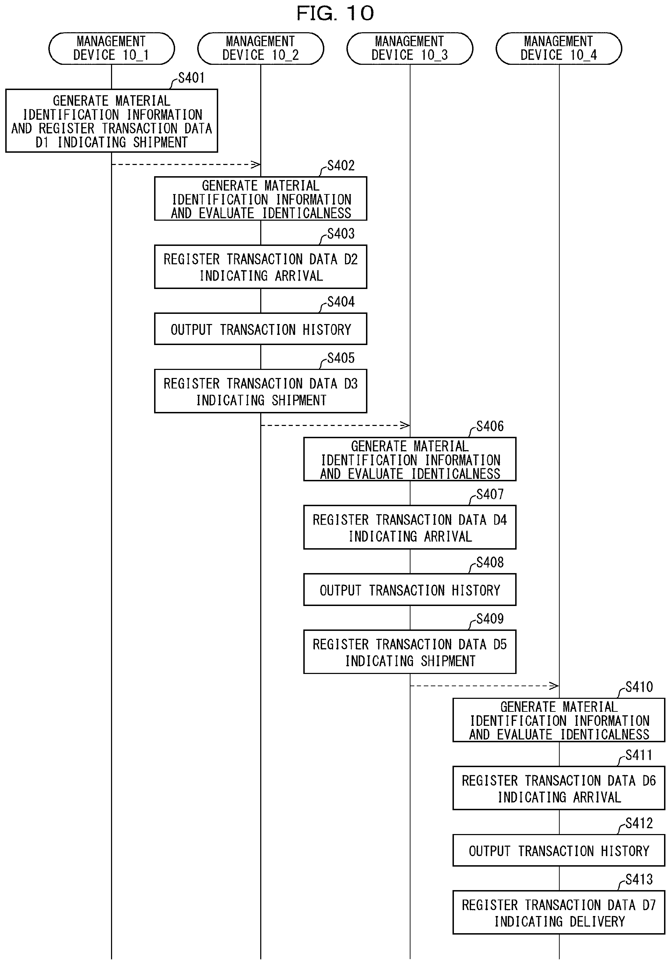

Fig. 10 is a sequence diagram which illustrates a specific example of operations which are made by the management devices 10 at respective bases in association with distribution of a material. In Fig. 10, dashed arrows each represent the distribution of the material as a result of a transaction. The dashed arrows each connect, from side to side, flows each of which indicates an operation of each of the management devices 10_1 to 10_4.

A process of step S401 is carried out at a stage of shipment of the material from a subcontractor.

In step S401, the management device 10_1 located at the base of the subcontractor generates material identification information of the material produced. Then, the management device 10_1 includes the material identification information thus generated, in transaction data D1 which indicates transaction content of the shipment, and registers, in a blockchain, the transaction data D1 including the material identification information. Detailed actions in step S401 are as described with reference to Fig. 7. As a result, the peripheral information included in the transaction data D1 indicates a condition surrounding the material which has been obtained in the stage of the shipment from the base of the subcontractor.

Processes of steps S402 and S403 are carried out at a stage of arrival of the material at a material manufacturer.

In step S402, the management device 10_2 located at the base of the material manufacturer generates material identification information of the material which has arrived from the subcontractor, and evaluates the identicalness of the material. The material which has arrived from the subcontractor is an example of a "material obtained by a transaction" in an embodiment of the present invention. Specifically, the management device 10_2 evaluates the identicalness by (i) obtaining, from the blockchain, the transaction data D1 which has been registered by the management device 10_1, and (ii) comparing the material identification information thus generated and the material identification information included in the transaction data D1. Detailed actions in step S402 are as described above with reference to Fig. 7. It is assumed here that as the evaluation information, evaluation information indicating the identicalness is outputted.

In step S403, the management device 10_2 includes, in transaction data D2 indicating transaction content of the arrival of the material, the material identification information which has been generated in step S402, and registers, in the blockchain, the transaction data D2 including the material identification information. Detailed actions in step S403 are as described with reference to Fig. 7. However, since the material identification information of the material has already been generated in step S402, the processes of steps S101 and S102 are omitted. Thus, the transaction data D2 includes the same material identification information as the transaction data D1 and different peripheral information from the transaction data D1. The peripheral information indicates a condition surrounding the material which has been obtained at the stage of the arrival at the base of the material manufacturer.

Step S404 is carried out at the time when a person in charge of the material manufacturer wants to check transaction history. Therefore, the process of step S404 is carried out not necessarily after step S403 or prior to step S404, and can be carried out at any point in time.

In step S404, the management device 10_2 obtains, from the blockchain, the transaction data D1 and D2 as the transaction data including the material identification information which has been generated in step S402. Further, the management device 10_2 outputs information indicating the transaction history in which the transaction information included in the transaction data D1 and D2 thus obtained is arranged in this order in which the transaction information has been registered in the blockchain. Detailed actions in step S404 are as described with reference to Fig. 9. However, since the material identification information of the material has already been generated in step S402, the processes of steps S101 and S102 are omitted. As a result, for example, (a) the peripheral information at the stage of the shipment from the subcontractor and (b) the peripheral information at the stage of the arrival at the material manufacturer are outputted as the history of the peripheral information of the material. Examples of the information which indicates the transaction history and which is outputted in step S404 include G102 and G103 shown in Fig. 5.

The process of step S405 is carried out at a stage in which the material is packed in a package and shipped out.

In step S405, the management device 10_2 includes, in transaction data D3 indicating transaction content of shipment of the material, the material identification information generated in step S402, and registers, in the blockchain, the transaction data D3 including the material identification information. The detailed actions in step S405 is as described in Fig. 7. However, since the material identification information of the material has already been generated in step S402, the processes of steps S101 and S102 are omitted. Thus, the transaction data D3 includes the same material identification information as the transaction data D2 and different peripheral information from the transaction data D2. The peripheral information indicates a condition surrounding the material which has been obtained at the stage in which the material is shipped out from the base of the material manufacturer.

Respective processes of steps S406 to S409 are carried out by the management device 10_3 when the material arrives at the importer/exporter. Since the details of the processes of steps S406 to S409 are the same as those of steps S402 to S405, detailed descriptions thereof will not be repeated. However, in step S406, the identicalness is evaluated with use of the transaction data D3 which has been registered by the management device 10_2. In step S407, transaction data D4 is registered. In step S407, the transaction data D1 to D4 are obtained, and information indicating a transaction history based on the transaction data D1 to D4 is outputted. As a result, for example, (a) the peripheral information at the stage of shipment from the subcontractor, (b) the peripheral information at the stage of the arrival at the material manufacturer, and (c) the peripheral information at the stage of the shipment from the material manufacturer are outputted as the history of the peripheral information of the material. Examples of the information which indicates the transaction history and which is outputted in step S408 include G102 to G105 shown in Fig. 5. In step S409, transaction data D5 is registered.

Respective processes of steps S410 to S413 are carried out by the management device 10_4 when the material arrives at a distributor. Since the details of the processes of steps S410 to S413 are the same as those of steps S402 to S405, detailed descriptions thereof will not be repeated. However, in step S410, the identicalness is evaluated with use of the transaction data D5 which has been registered by the management device 10_3. In step S411, transaction data D6 is registered. In step S412, the transaction data D1 to D6 are obtained, and the information indicating the transaction history based on the transaction data is outputted. As a result, for example, (a) the peripheral information at the stage of the shipment from the subcontractor, (b) the peripheral information at the stage of the arrival at the material manufacturer, (c) the peripheral information at the stage of the shipment from the material manufacturer, and (d) the peripheral information at the stage of arrival at the distributor are outputted as the history of the peripheral information of the material. The information indicating the transaction history outputted in step S412 is, for example, G102 to G107 shown in Fig. 5. In step S413, transaction data D7 which indicates delivery to an end user is registered.

This is the end of the specific example of the operation of each of the management devices 10. Note that the operation of the management device 10 at each of the bases is not limited to the foregoing specific example. For example, at any one or more of the bases, the process of evaluating the identicalness need not necessarily be carried out. Further, at a certain base, the process of outputting the transaction history need not necessarily be carried out. In addition, at a certain base, transaction data indicating other transaction history may be registered.

### <Effects of present embodiment>

As described above, the management system in accordance with the present embodiment (i) generates, at each base, material identification information indicating a feature unique to a material by using information which indicates the material and which has been obtained from a sensor, and (ii) registers, in a blockchain, transaction data including the material identification information thus generated. Therefore, it is possible to determine the identicalness between a material obtained by the present transaction and a material which has been registered in transaction data in a transaction immediately preceding the present transaction.

In addition, the present embodiment makes it possible to reliably associate a material in the real world and the transaction data recorded in the blockchain with each other, by generating the material identification information and including the material identification information in the transaction data at each base. As a result, the present embodiment can provide a more reliable traceability function while ensuring the identicalness of the material, by using the material identification information as a key.

### [Variation 1]

The above described embodiment can be modified as follows so as to correspond to a case where the distribution route of an identical material is branched. The following cases 1 and 2 can be considered as examples of such a case in which even though an identical material is distributed, the distribution route is branched.

The case 1 is a case in which, at a base a, there are a plurality of packages containing the identical material which have been simultaneously produced and the following transactions are carried out: (a) a first transaction in which some of the packages are shipped to a base b1 and (b) a second transaction in which other some of the packages are shipped to a base b2.

The case 2 is a case in which at a base a, a material packed in a first package is divided into a plurality of second packages, and the following transactions are carried out: (a) a first transaction in which some of the plurality of second packages are shipped to a base b1 and (b) a second transaction in which other some of the second packages are shipped to a base b2. Note that in this case, it may be assumed that the first package contains in advance the plurality of second packages each containing identical material. Alternatively, the material contained in the first package may be re-packed in a plurality of new second packages. In this case, it may be assumed that the material contained in the first package is not altered even after the process of being re-packing in the second package.

In both of the cases 1 and 2, the management device 10 located at the base a includes the material identification information of the material in transaction data D1 indicating the first transaction and transaction data D2 indicating the second transaction, and registers, in a blockchain, the transaction data D1 and D2 which include the material identification information.

The management device 10 located at the base b1 carries out a process of evaluating the identicalness of the material obtained by the first transaction, by referring to the transaction data D1 indicating the first transaction. The management device 10 located at the base b2 carries out a process of evaluating the identicalness of the material obtained by the second transaction, by referring to the transaction data D2 indicating the second transaction.

The following methods 1 and 2 can be considered as examples of a method by which the management device 10 located at each of the bases b1 and b2 outputs transaction history.

The method 1 includes package identification information in the transaction data. The management devices 10 obtain, from the blockchain, one or more pieces of the transaction data which include respective identical pieces of the material identification information and respective identical pieces of the package identification information, so that the management devices 10 each output information indicating a transaction history including a base corresponding to a branch distribution route concerned.

The method 2 includes, in the transaction data, transaction history information which allows for identification of transaction data which indicates immediately preceding transaction content. By tracing the transaction history information, the management devices 10 each can output, without using the material identification information, information indicating the transaction history including the base corresponding to the branch distribution route concerned.

Note that the case in which the distribution route is branched is not limited to the cases 1 and 2 described above. Further, the method of outputting the transaction history in a case where the distribution route is branched is not limited to the methods 1 and -2 described above.

### [Variation 2]

The embodiment described above can be modified into an aspect in which access control for transaction history is carried out.

In Variation 2, a pair of a private key and a public key is stored in each of the management devices 10. Each of the management devices 10 has the pair which differs from the pair which another one of the management devices 10 has.

The transaction registering section 13 encrypts information to be included in transaction data with use of the private key. Note that the transaction registering section 13 encrypts the information for which encryption has been instructed, and then includes, in the transaction data, the information thus encrypted. The transaction registering section 13, on the other hand, does not encrypt information for which no encryption has been instructed, and includes such information as is in the transaction data.

For example, in a case where information instructing encryption of transaction information is obtained, the transaction registering section 13 generates encrypted transaction information in which the transaction information is encrypted. Then, the transaction registering section 13 includes, in the transaction data, material identification information, peripheral information, and the encrypted transaction information.

The public key corresponding to the private key which has been used to encrypt the information is made public to a management device 10 at a base which is authorized to browse the information. In this case, in the management device 10 corresponding to the base authorized to browse, the information outputting section 15 decrypts the encrypted information with use of the public key, so that the transaction history is outputted.

For example, the transaction data including the encrypted transaction information is registered only by the management device 10_2 located at the base of the material manufacturer and the management device 10_4 located at the base of the distributor, and transaction data including unencrypted transaction information is registered by the other management devices 10_1 and 10_3. Further, the public key held by the management device 10_2 is made public to the management device 10_4, and the public key held by the management device 10_4 is made public to the management device 10_2. In this case, the material manufacturer who is a material supplier and the distributor who is a recipient can decrypt the encrypted transaction information and browse all the transaction history. On the other hand, the subcontractor and the importer/exporter cannot browse all the transaction history because they cannot decrypt the encrypted transaction information. According to Variation 2, it is possible to realize access control for the transaction history, and limit users who can browse the transaction history.

Note that although Variation 2 has dealt with an example in which transaction information is encrypted with use of a private key, an embodiment of the present invention is not limited to this, and the peripheral information may be encrypted or the peripheral information and the transaction information may be encrypted. Further, although Variation 2 has dealt with an example in which the management device 10 for registering the encrypted transaction information serves as the management devices 10 located at the bases of the material manufacturer and the distributor, an embodiment of the present invention is not limited to this, and encryption may be carried out by another management device 10. The management device 10 to which the public key for decrypting the encrypted transaction information is made public is not limited to the example described above.

### [Variation 3]

The embodiment described above can be modified into an aspect in which access control to transaction history is carried out.

In Variation 3, the management system 1 further has an authentication server (not illustrated). The transaction obtaining section 14 of the management device 10 is modified so as to communicate with the node 20 via the authentication server.

When a request to the node 20 for retrieval of transaction data is received from the transaction obtaining section 14, the authentication server forwards, to the node 20, the request for the retrieval. The authentication server thus obtains the transaction data that satisfies a search condition.

At this time, the authentication server determines whether or not a transaction subject is authorized to browse each piece of the transaction data of a transaction route indicated in the transaction data which satisfies the search condition, on the basis of a position of the transaction subject corresponding to the requesting management device 10 on the transaction route. The position of the transaction subject on such a route can be analyzed by tracing the transaction route, on the basis of the transaction data stored in the blockchain. For example, when the transaction subject is present at a predetermined upstream position on the route or at a predetermined downstream position on the route, the authentication server determines that the transaction subject is authorized to browse each piece of the transaction data of the route. Further, when the transaction subject is present between the predetermined upstream position and the predetermined downstream position, the authentication server determines that the transaction subject is authorized to browse the transaction data relating to the transaction subject among the transaction data of the route but that the transaction subject is not authorized to browse the other transaction data. In addition, the authentication server transmits, to the requesting management device 10, the transaction data which the transaction subject has been determined to be authorized to browse, among the transaction data that has been obtained from the node 20 and that satisfies the search condition.

Variation 3 can realize access control for the transaction history, and can restrict users who can browse the transaction history.

### [Variation 4]

The embodiment described above can be modified to assist a user in determining the identicalness of a material by using package appearance photographs included in peripheral information.

In Variation 4, the information outputting section 15 calculates the degree of coincidence by comparing (a) a package appearance photograph in peripheral information contained in transaction data indicating transaction content and (b) a package appearance photograph obtained as peripheral information from a material obtained by a transaction. Then, the information outputting section 15 outputs the degree of coincidence thus calculated. Alternatively, the information outputting section 15 may output a warning in a case where the degree of coincidence is not more than a threshold. This allows the user to check the degree of change in the package appearance, and to determine, if the degree of change is small, that the material is likely to be identical.

The information outputting section 15 may also output a history of the package appearance photograph included in the peripheral information as the information indicating a transaction history. This allows the user to check a change in the package appearance photograph of the material, and to determine, if the degree of the change is small, that the material is likely to be identical.

Variation 4 can assist the user in determining the identicalness of the material as described above.

### [Variation 5]

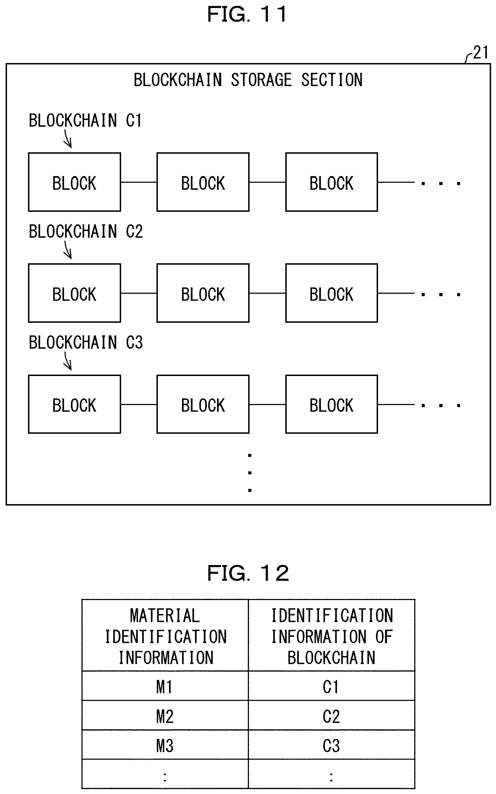

The embodiment and the variations described above have dealt with examples in which transaction data indicating respective processes carried out by transaction subjects is stored in one blockchain which is stored in the blockchain system 200. However, the embodiment described above can be also modified to deal with a case where a blockchain is generated for each transaction route of a material. In this case, each blockchain is generated as a sequence of blocks each containing transaction data relating to a transaction on a route concerned. Variation 5 will be discussed with reference to Figs. 11 to 14.

### <Configuration of node 20 in Variation 5>

The following will discuss functional configurations of each of the nodes 20 in the blockchain system 200 in Variation 5.

The blockchain storage section 21 is modified so that a plurality of blockchains can be stored in the blockchain storage section 21. Fig. 11 is a diagram schematically illustrating a plurality of blockchains stored in the blockchain storage section 21. In this example, three blockchains C1 to C3 are stored. The plurality of blockchains C1 to C3 are synchronized with the plurality of blockchains C1 to C3 stored in other blockchain storage sections 21 of other nodes 20. In other words, duplicates of the plurality of blockchains C1 to C3 are stored in the blockchain storage section 21 of each of the nodes 20. Note that although three blockchains are illustrated in Fig. 11, this does not limit the number of blockchains in Variation 5.

In addition to the above-described configuration, the transaction receiving section 22 is modified to receive (a) information for identifying a blockchain in which to register transaction data, (b) a request for creating a new blockchain, and (c) a request for duplicating a blockchain.

The transaction receiving section 22 also broadcasts, to the other nodes 20 via the sharing section 23, the information for identifying the blockchain in which to register the transaction data, together with the transaction data to be registered.

In addition to the above-described configuration, the block adding section 24 is modified to have (1) the function of operating on an existing blockchain, (2) the function of creating a new blockchain, and (3) the function of duplicating a blockchain.

### (Function of operating on existing blockchain)

In a case where the transaction receiving section 22 or the sharing section 23 receives the identification information of the existing blockchain and the transaction data, the block adding section 24 carries out the above-described operation on the blockchain indicated by the identification information. As a result, the transaction data is recorded in the blockchain.

### (Function of creating new blockchain)

In a case where the transaction receiving section 22 receives a request for creating a new blockchain, the block adding section 24 creates a new blockchain in the blockchain storage section 21. Further, the block adding section 24 broadcasts the new blockchain thus created, to other nodes 20 via the sharing section 23. Moreover, the block adding section 24 stores, in the blockchain storage section 21, a new blockchain received from another node 20 via the sharing section 23.

### (Function of duplicating blockchain)

In a case the transaction receiving section 22 receives a request for duplicating a blockchain, the block adding section 24 creates a new blockchain which is obtained by duplicating the blockchain indicated in the request, and stores the new blockchain in the blockchain storage section 21. The block adding section 24 broadcasts, to other nodes 20 via the sharing section 23, the blockchain which has been obtained by duplication. Further, the block adding section 24 stores, in the blockchain storage section 21, a blockchain which has been obtained by duplication and which has been received from the another node 20 via the sharing section 23.

In addition to the configuration described above, the transaction outputting section 25 is modified so as to search any of existing blockchains for transaction data.

Specifically, the transaction outputting section 25 receives information that identifies a blockchain together with a search condition for transaction data. The information that identifies the blockchain is identification information of an existing blockchain which is stored in the blockchain storage section 21. The transaction outputting section 25 operates as described above on the blockchain indicated by the identification information. Then, the transaction outputting section 25 obtains, from the blockchain, the transaction data which satisfies the search condition, and outputs the transaction data.

### <Configuration of management device 10 in Variation 5>

The following will discuss a configuration of functional blocks of the management device 10 in accordance with Variation 5. Note that the material identification information generating section 11 and the peripheral information obtaining section 12 are configured as described above. The transaction registering section 13, the transaction obtaining section 14 and the information outputting section 15 are modified as follows.

The transaction registering section 13 is modified so as to have (1) the function of identifying an existing blockchain, (2) the function of requesting creation of a new blockchain, and (3) the function of requesting duplication of a blockchain, in addition to the above-described functions.

### (Function of identifying existing blockchain)

The transaction registering section 13 identifies one of existing blockchains as a blockchain in which transaction data should be registered. Specifically, the transaction registering section 13 obtains material identifying information of a material for a transaction, together with information which indicates a process relating to the transaction and which is to be registered as the transaction data. The transaction registering section 13 identifies the existing blockchain corresponding to a route of the transaction concerned, on the basis of the material identification information.

For example, the transaction registering section 13 identifies the blockchain in which to register the transaction data, by referring to a table in which the material identification information and identification information of blockchains are associated with each other. Fig. 12 is a diagram showing an example of the table in which the material identification information and the identification information of blockchains are associated with each other. In Fig. 12, for example, the identification information "C1" of a blockchain is associated with the material identification information "M1". Hereinafter, a material identified by "M1" and the like is referred to "material M1" and the like, and a blockchain identified by "C1" and the like is referred to as "blockchain C1" and the like. In this example, the blockchain C1 corresponds to the route on which a transaction of the material M1 is carried out. Also, the blockchain C2 corresponds to the route on which a transaction of the material M2 is carried out. Also, the blockchain C3 corresponds to the route on which a transaction of the material M3 is carried out. Note that the table may be individually stored in each of the management devices 10, or may be stored in a device or the like (e.g., a database server (not illustrated)) capable of communicating with each of the management devices 10 and shared by the management devices 10.

Note that instead of referring to the table described above, the transaction registering section 13 may identify the blockchain in which to register the transaction data including the material identification information, by searching the blockchain system 200 for the blockchain in which to register the transaction data. Specifically, the transaction registering section 13 can transmit, to a node 20, a search condition for searching each blockchain for the transaction data including the material identification information.

The transaction registering section 13 also transmits, to the node 20, created transaction data together with the identification information of an identified blockchain. As a result, the transaction data is registered in the blockchain corresponding to the route of the transaction relating to the process indicated in the transaction data.

### (Function of requesting creation of new blockchain)

The transaction registering section 13 requests a node 20 to create a new blockchain in which transaction data should be registered. The request for creation of a new blockchain is made when there has not yet been a blockchain corresponding to a route involving a transaction. For example, such a request for creation of a new blockchain is made by the management device 10 which corresponds to a transaction subject (e.g., material manufacturer) present most upstream on the route.

Specifically, when the transaction registering section 13 obtains, via the input device, information that instructs creation of a new blockchain, the transaction registering section 13 requests the node 20 to create a new blockchain.

Further, when the creation of the new blockchain is completed, the transaction registering section 13 registers, in the new blockchain, transaction data indicating a transaction-related process. In this manner, when a transaction of a material is newly started from the transaction subject located most upstream of a transaction route, a corresponding blockchain is generated and recording of transaction data is started.

Note that the information that instructs creation of a new blockchain is not necessarily obtained via the input device. For example, in a case where the "function of identifying an existing blockchain" described above is performed but no corresponding blockchain can be identified, the transaction registering section 13 may operate on the assumption that the information that instructs creation of a new blockchain has been obtained.

The transaction registering section 13 registers, in the table as shown in Fig. 12, identification information of the new blockchain created and the material identification information such that the identification information of the new blockchain and the material identification information are associated with each other.

### (Function of requesting duplication of blockchain)

The transaction registering section 13 requests a node 20 to carry out duplication of a blockchain in which transaction data should be registered. The request for the duplication is made in a case where a route involving the transaction is branched. The phrase "a route involving the transaction is branched" means that respective transactions of part of material for transactions and other part of the material are made on different routes into which one route of transactions is branched. Such a request for duplication is made, for example, by the management device 10 corresponding to a transaction subject that has caused branching of the route of transactions.

Specifically, when the transaction registering section 13 obtains, via the input device, information that instructs duplication of a blockchain, the transaction registering section 13 requests a node 20 to duplicate the blockchain. Note that the information that instructs the duplication contains identification information of the blockchain to be duplicated.

Upon completion of the duplication, the transaction registering section 13 registers, in the blockchain which has been duplicated in the duplication, transaction data indicating processes relating to transactions on one of branch routes. The transaction registering section 13 further registers, in the blockchain created as a result of the duplication, transaction data indicating processes relating to transactions on the other one of the branch routes.

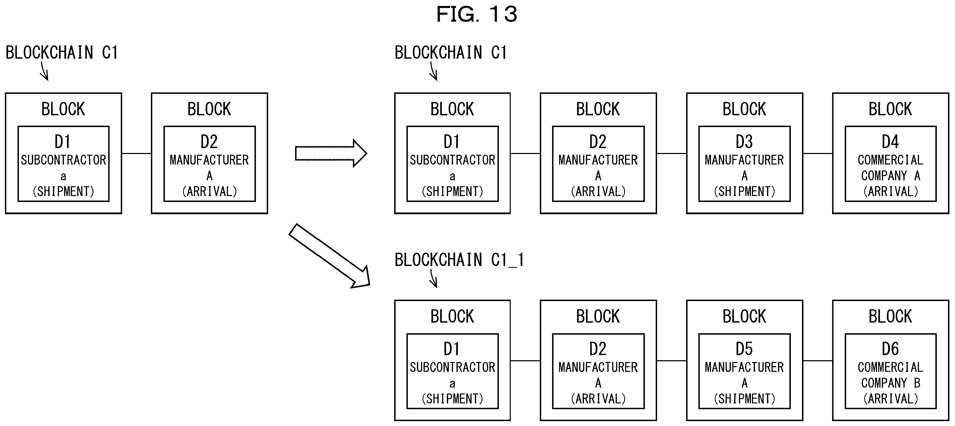

Fig. 13 is a diagram schematically illustrating a blockchain that is duplicated when a transaction route is branched. When a manufacturer A purchases a material M (e.g., 100 bags) from a subcontractor a in a transaction carried out, a blockchain C1 is generated and transaction data D1 and D2 are registered as shown in a left part of Fig. 13. The transaction data D1 indicates a transaction detail that the subcontractor a shipped out 100 bags of the material M. The transaction data D2 indicates a transaction detail in which the 100 bags of the material M have arrived at the manufacturer A.

Thereafter, when the material manufacturer A sells part (e.g., 60 bags) of the material M to a commercial company A and other part (e.g., 40 bags) of the material M to a commercial company B, the blockchain C1_1 is generated as a duplicate of the blockchain C1. Transaction data D3 and D4 are registered in the blockchain C1. The transaction data D3 indicates a transaction detail that the material manufacturer A shipped out the 60 bags of the material M. The transaction data D4 indicates a transaction detail that the 60 bags of the material M have arrived at the commercial company A. In the blockchain C1_1, transaction data D5 and D6 are registered. The transaction data D5 indicates a transaction detail that the material manufacturer A shipped out the 40 bags of the material M. The transaction data D6 indicates a transaction detail that the 40 bags of the material M have arrived at the commercial company B.

Note that, for simplification of an explanation, although an example shown in Fig. 13 illustrates a case where one piece of transaction data is recorded in one block, a plurality of pieces of transaction data may be recorded in one block.

The transaction obtaining section 14 is modified so as to transmit, to a node 20, information that identifies a blockchain to be identified, together with a search condition of the transaction data. The transaction obtaining section 14 may, for example, refer to the above-described table in which the material identification information and the identification information of the blockchain are associated with each other. This allows the transaction obtaining section 14 to obtain the transaction data which satisfies the search condition, from the blockchain corresponding to the above specific material identification information.

The information outputting section 15 outputs information indicating a transaction history of the material on the basis of the order of registration of each transaction data contained in the blockchain corresponding to the route of the transaction of the material. Specifically, the information outputting section 15 identifies, as the blockchain corresponding to the route of the transaction of the material, the blockchain associated with the material identification information of the material, with reference to the above-described table. All the transaction data contained in the blockchain thus identified indicates transaction content for the material. In light of this, the information outputting section 15 obtains all the transaction data from the blockchain via the transaction obtaining section 14. Therefore, the information outputting section 15 outputs information indicating the transaction history in which pieces of all the transaction data obtained are arranged in the order of registration.

### <Operation of Variation 5>

### (Operation for registration of transaction data)

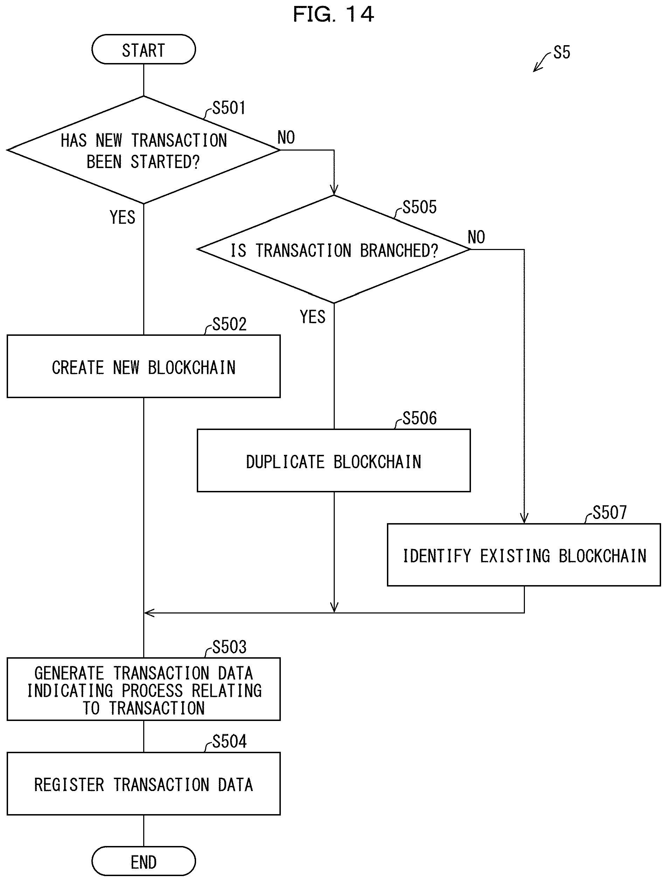

Fig. 14 is a flowchart illustrating the operation S5 in which the management device 10 registers transaction data.

In step S501, the transaction registering section 13 determines whether or not information that instructs creation of a new blockchain is obtained, for example, because a new transaction has been started. If a result of determination is Yes in step S501, the process in next step S502 is carried out. A case where the result of determination is No in step S502 will be described later.

In step S502, the transaction registering section 13 requests a node 20 to create a new blockchain.

In step S503, generated is transaction data indicating a process which has been carried out, by a transaction subject, in connection with the transaction.

In step S504, the transaction data which has been generated in step S503 is registered in the new blockchain which has been created in response to the request made in step S502. The processes of steps S503 and S504 are the same as those of steps S101 to S105 shown in Fig. 7, and therefore, detailed descriptions thereof will not be repeated.

On the other hand, if the result of determination is NO in step S502, the process in next step S505 is carried out. In step S505, the transaction registering section 13 determines whether or not information that instructs duplication of a blockchain has been obtained, for example, since a route of the transaction is branched. If a result of determination is Yes in step S505, the process in next step S506 is carried out. A case where the result of determination is No in step S505 will be described later.

In step S506, the transaction registering section 13 requests the node 20 to duplicate the blockchain.

Thereafter, a duplicate blockchain obtained by duplication in step S506 and the blockchain which has been duplicated are each subjected to the processes of steps S503 and S504. As a result, respective pieces of the transaction data indicating processes relating to transactions carried out on branch routes are registered in different blockchains.

On the other hand, if the result of determination is NO in step S505, the process of next step S507 is carried out. In step S507, the transaction registering section 13 identifies an existing blockchain in which the transaction data should be registered. This identification of the existing blockchain is carried out by referring to the table described above.

Thereafter, the blockchain identified in step S507 is subjected to the processes of step S503 and S304. As a result, the transaction data indicating the processes relating to the transactions concerned is registered in the blockchain corresponding to a route of the transaction concerned.

Then, the management device 10 ends the operation S5.

Since the operation of evaluating the identicalness of the material in Variation 5 is the same as the operation S2 shown in Fig. 8 except for step S202, a detailed explanation thereof will not be repeated. In the operation of evaluating the identicalness of the material in Variation 5, in step S202, the identification information of the blockchain corresponding to the transaction concerned is identified in obtaining the transaction data indicating transaction content.

Further, since the operation of outputting the transaction history in Variation 5 is the same as the operation S3 shown in Fig. 9 except for step S302, a detailed explanation thereof will not be repeated. In step S302, all pieces of the transaction data contained in the blockchain corresponding to the material identification information is obtained in the operation of outputting the transaction history in Variation 5, whereas a plurality of pieces of the transaction data are obtained by the search condition that the same material identification information is contained in operation S3.

As described above, in Variation 5, even in the case of an embodiment in which a blockchain is generated for each transaction route of the material, it is possible to achieve more reliable traceability of an object for transactions while ensuring the identicalness of a material in a supply chain of the material.

### [Software Implementation Example]

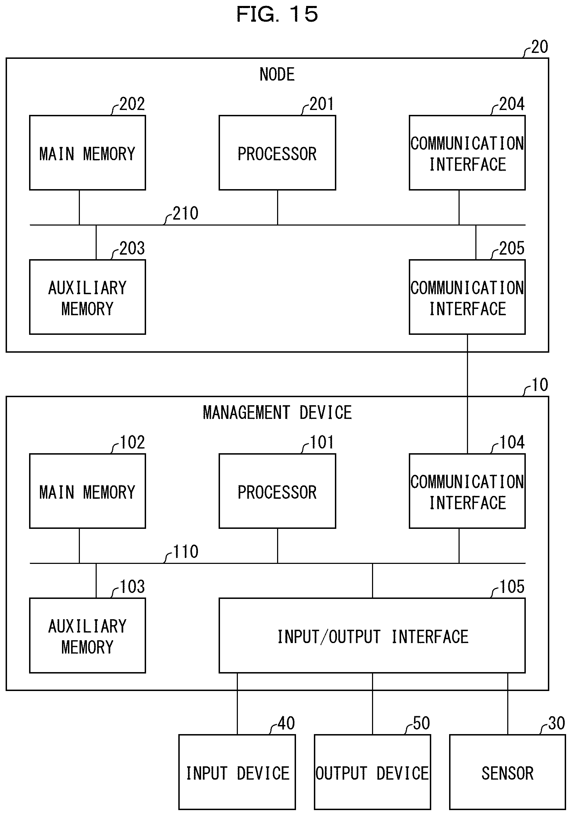

Functional blocks of the management device 10 (particularly, the material identification information generating section 11, the transaction registering section 13, the transaction obtaining section 14, and the information outputting section 15) and functional blocks of the node 20 (the blockchain storage section 21, the transaction receiving section 22, the sharing section 23, the block adding section 24, and the transaction outputting section 25) each can be realized by a logic circuit (hardware) provided in an integrated circuit (IC chip) or the like or can be alternatively realized by software. In the latter case, the management device 10 and the node 20 each can be configured by, for example, a computer (electronic computer). Fig. 15 is a block diagram illustrating an example of a physical configuration of a computer which is used as the management device 10 and the node 20.

### (Physical configuration of management device 10)

The management device 10 can be configured by a computer which includes a bus 110, a processor 101, a main memory 102, an auxiliary memory 103, a communication interface 104, and an input/output interface 105, as illustrated in Fig. 15. The processor 101, the main memory 102, the auxiliary memory 103, the communication interface 104, and the input/output interface 105 are interconnected with each other via the bus 110. The input/output interface 105 is configured to have the sensor 30, the input device 40, and the output device 50 connected thereto.

The processor 101 can be, for example, a microprocessor, a digital signal processor, a microcontroller, or any combination of these processors.

The main memory 102 can be, for example, a semiconductor random access memory (RAM).

The auxiliary memory 103 can be, for example, a flash memory, a hard disk drive (HDD), a solid state drive (SSD), or any combination of these memories. In the auxiliary memory 103, a program for causing the processor 101 to execute the operations S1, S2, S3, and S5 of the management device 10 described above is stored. The processor 101 causes the program stored in the auxiliary memory 103 to be loaded in the main memory 102 and executes instructions contained in the loaded program. In addition, in the auxiliary memory 103, various data to which the processor 101 refers so as to cause the computer to operate as the management device 10 are stored.

The communication interface 104 connects to the network 91.

The input/output interface 105 can be, for example, a universal serial bus (USB) interface, a near field communication interface such as an infrared interface and Bluetooth (registered trademark), or any combination of these interfaces.

The sensor 30 can be, for example, a camera, an odor sensor, or any combination of these sensors, as described above. The input device 40 can be, for example, a keyboard, a mouse, a touch-pad, a microphone, or any combination of these devices. The output device 50 can be, for example, a display, a printer, a speaker, or any combination of these devices.

### (Physical configuration of node 20)

The node 20 can be configured by a computer which includes a bus 210, a processor 201, a main memory 202, an auxiliary memory 203, a communication interface 204, and a communication interface 205, as illustrated in Fig. 15. The processor 201, the main memory 202, the auxiliary memory 203, the communication interface 204, and the communication interface 205 are interconnected with each other via the bus 210.

The processor 201 can be, for example, a microprocessor, a digital signal processor, a microcontroller, or any combination of these processors.

The main memory 202 can be, for example, a semiconductor RAM.

The auxiliary memory 203 can be, for example, a flash memory, a HDD, an SSD, or any combination of these memories. In the auxiliary memory 203, a program for causing the computer to operate as the node 20 is stored. The processor 201 causes the program stored in the auxiliary memory 203 to be loaded in the main memory 202 and executes instructions contained in the loaded program. In addition, in the auxiliary memory 203, the above-described blockchain, and various data to which the processor 201 refers so as to cause the computer to operate as the node 20 are stored.

The communication interface 204 connects to the network 91. The communication interface 205 connects to the network 92.

Note that the above-described programs each may be made available to the computer by being stored in an external storage medium and read from the external storage medium, instead of being stored in the auxiliary memory 103 or the auxiliary memory 203. Examples of the external storage medium encompass a computer-readable "non-transitory tangible medium" such as a tape, a disk, a card, a semiconductor memory, and a programmable logic circuit. The programs each may be made available to the computer via any transmission medium (such as a communication network and a broadcast wave) which allows the program to be transmitted. Note that an aspect of the present invention can also be achieved in the form of a data signal in which the program is embodied via electronic transmission and which is embedded in a carrier wave.

Aspects of the present invention can also be expressed as follows:
A management device in accordance with an aspect of the present invention is a management device located at a base that is a component of a supply chain in which transactions of a material of a product are made, the management device including: a material identification information generating section configured to generate material identification information indicating a feature unique to the material, by using information indicating the material obtained by a sensor; and a transaction registering section configured to register, in a blockchain, a piece of transaction data containing the material identification information, the piece of transaction data being registered as transaction data indicating transaction content for the material, the blockchain being shared by a plurality of nodes and having a sequence of blocks containing the transaction data indicating the transaction content for the material, the plurality of nodes being configured to approve a block by using a predetermined consensus algorithm and the block being added to the blockchain.

The above configuration makes it possible to more reliably associate a material in the real world and transaction data with each other by using the material identification information. Since the management device is located at each of bases in a supply chain, more reliable traceability can be achieved.

A management device in accordance with an aspect of the present invention is preferably configured to further include: a transaction obtaining section configured to obtain, from the blockchain, the transaction data indicating the transaction content for the material; and an evaluating section configured to output evaluation information as a result of evaluation of identicalness of the material indicated by the transaction data and a material obtained by a transaction, by comparing (a) the material identification information which is contained in the transaction data obtained and (b) material identification information which is generated by the material identification information generating section and which indicates a feature unique to the material obtained by the transaction.

The above configuration makes it possible to determine, at the base in the supply chain, whether a material obtained by a present transaction is identical to a material recorded in transaction indicating a transaction immediately preceding the present transaction.

A management device in accordance with an aspect of the present invention is preferably configured to further include a transaction obtaining section configured to obtain, from the blockchain, one or more pieces of the transaction data containing the material identification information, the evaluating section being configured to output information indicating a transaction history of the material, on the basis of order of registration of the pieces of the transaction data obtained.

The above configuration makes it possible to check the transaction history of a material obtained by a transaction, at the base in the supply chain.

A management device in accordance with an aspect of the present invention is preferably configured to further include: a transaction history outputting section configured to output information indicating a transaction history of the material, the blockchain being generated, for each transaction route of the material, as a sequence of blocks containing the transaction data indicating transaction content on the transaction route of the material, the transaction registering section registering, in the blockchain corresponding to the transaction route, the transaction data indicating the transaction content on the transaction route for the material, and the transaction history outputting section outputting the information, on the basis of order of registration of pieces of the transaction data contained in the blockchain corresponding to the transaction route.

The above configuration makes it possible to check the transaction history of a material obtained by a transaction, at the base in the supply chain, even in an embodiment in which a blockchain is generated for each transaction route.

A management device in accordance with an aspect of the present invention is preferably configured to further include: a peripheral information obtaining section configured to obtain peripheral information indicating a surrounding condition of the material for a transaction, the transaction registering section being configured to register, in the blockchain, the transaction data containing the material identification information and the peripheral information, the transaction history outputting section being configured to include a history of the peripheral information in the information indicating the transaction history and output the information including the history of the peripheral information.

The above configuration allows a user to check whether a material obtained by a transaction has been distributed in a state in which a surrounding condition is appropriate.

A management system in accordance with an aspect of the present invention includes: a management device described above, the management device being located at each of a plurality of bases constituting a supply chain in which transactions of a material of a product are made; and a blockchain system constituted by the plurality of nodes.

The above configuration makes it possible to more reliably associate a material in the real world and transaction data with each other by using the material identification information, and can achieve more reliable traceability.

A management method in accordance with an aspect of the present invention includes steps carried out by a management device located at a base that is a component of a supply chain in which transactions of a material of a product are made, the steps being the steps of: generating material identification information indicating a feature unique to the material, by using information indicating the material obtained by a sensor; and registering, in a blockchain, a piece of transaction data containing the material identification information, the piece of transaction data being registered as transaction data indicating transaction content for the material, the blockchain being shared by a plurality of nodes and having a sequence of blocks containing the transaction data indicating the transaction content for the material, the plurality of nodes being configured to approve a block by using a predetermined consensus algorithm and the block being added to the blockchain.

The above configuration provides an effect similar to that of the above-described management device.

A management program in accordance with an aspect of the present invention is for causing a computer to function as a management device described above, the management program causing the computer to function as each of said sections.

The above configuration yields an effect similar to that of the above-described management device.

A computer-readable storage medium in accordance with an aspect of the present invention is a storage medium in which a management program described above is stored.

The above configuration yields an effect similar to that of the above-described management device.

### [Additional remarks]

The present invention is not limited to the embodiments, but can be altered by a skilled person in the art within the scope of the claims. The present invention also encompasses, in its technical scope, any embodiment derived by combining technical means disclosed in differing embodiments. Further, it is possible to form a new technical feature by combining the technical means disclosed in the respective embodiments.

### Reference Signs List

- 1: management system
- 10, 10_1, 10_2, 10_3, 10_4, 30: management device
- 11: material identification information generating section
- 12: peripheral information obtaining section
- 13: transaction registering section
- 14: transaction obtaining section
- 15: information outputting section
- 200: blockchain system
- 20, 20_1, 20_2, 20_3, 20_4: node
- 21: blockchain storage section
- 22: transaction receiving section
- 23: sharing section
- 24: block adding section
- 25: transaction outputting section
- 30: sensor
- 40: input device
- 50: output device
- 91, 92: network
- 101, 201: processor
- 102, 202: main memory
- 103, 203: auxiliary memory
- 104, 204, 205: communication interface
- 105: input/output interface
- 110, 210: bus

## Claims

1. A management device located at a base that is a component of a supply chain in which transactions of a material of a product are made, the management device comprising:
a material identification information generating section configured to generate material identification information indicating a feature unique to the material, by using information indicating the material obtained by a sensor; and
a transaction registering section configured to register, in a blockchain, a piece of transaction data containing the material identification information, the piece of transaction data being registered as transaction data indicating transaction content for the material, the blockchain being shared by a plurality of nodes and having a sequence of blocks containing the transaction data indicating the transaction content for the material, the plurality of nodes being configured to approve a block by using a predetermined consensus algorithm and the block being added to the blockchain.

2. The management device as set forth in claim 1, further comprising:
a transaction obtaining section configured to obtain, from the blockchain, the transaction data indicating the transaction content for the material; and
an evaluating section configured to output evaluation information as a result of evaluation of identicalness of the material indicated by the transaction data and a material obtained by a transaction, by comparing (a) the material identification information which is contained in the transaction data obtained and (b) material identification information which is generated by the material identification information generating section and which indicates a feature unique to the material obtained by the transaction.

3. The management device as set forth in claim 1 or 2, further comprising:
a transaction obtaining section configured to obtain, from the blockchain, one or more pieces of the transaction data containing the material identification information; and
a transaction history outputting section configured to output information indicating a transaction history of the material, on the basis of order of registration of the pieces of the transaction data obtained.

4. The management device as set forth in claim 1 or 2, further comprising:
a transaction history outputting section configured to output information indicating a transaction history of the material,
the blockchain being generated, for each transaction route of the material, as a sequence of blocks containing the transaction data indicating transaction content on the transaction route of the material,
the transaction registering section registering, in the blockchain corresponding to the transaction route, the transaction data indicating the transaction content on the transaction route for the material, and
the transaction history outputting section outputting the information, on the basis of order of registration of pieces of the transaction data contained in the blockchain corresponding to the transaction route.

5. The management device as set forth in claim 3 or 4, further comprising:
a peripheral information obtaining section configured to obtain peripheral information indicating a surrounding condition of the material for a transaction,
the transaction registering section being configured to register, in the blockchain, the transaction data containing the material identification information and the peripheral information,
the transaction history outputting section being configured to include a history of the peripheral information in the information indicating the transaction history and output the information including the history of the peripheral information.

6. A management system comprising:
a management device recited in any one of claims 1 to 5, the management device being located at each of a plurality of bases constituting a supply chain in which transactions of a material of a product are made; and
a blockchain system constituted by the plurality of nodes.

7. A management method comprising steps carried out by a management device located at a base that is a component of a supply chain in which transactions of a material of a product are made, the steps being the steps of:
generating material identification information indicating a feature unique to the material, by using information indicating the material obtained by a sensor; and
registering, in a blockchain, a piece of transaction data containing the material identification information, the piece of transaction data being registered as transaction data indicating transaction content for the material, the blockchain being shared by a plurality of nodes and having a sequence of blocks containing the transaction data indicating the transaction content for the material, the plurality of nodes being configured to approve a block by using a predetermined consensus algorithm and the block being added to the blockchain.

8. A management program for causing a computer to function as a management device recited in any one of claims 1 to 5, the management program causing the computer to function as each of said sections.

9. A computer-readable storage medium in which a management program recited in claim 8 is stored.
